## Europäisches Patentamt

## European Patent Office

## Office européen des brevets

(19)

(11) Veröffentlichungsnummer: **0 205 939**
**B1**

(12) # EUROPÄISCHE PATENTSCHRIFT

(45) Veröffentlichungstag der Patentschrift:
27.09.89

(21) Anmeldenummer: **86106990.4**

(22) Anmeldetag: **22.05.86**

(51) Int. Cl.⁴: **B 64 C 9/18**, B 64 C 9/24

(54) **Antriebs- und Führungsvorrichtung für eine an einem Flugzeugtragflügel angeordnete Klappe.**

(30) Priorität: **22.06.85 DE 3522448**

(43) Veröffentlichungstag der Anmeldung:
**30.12.86 Patentblatt 86/52**

(45) Bekanntmachung des Hinweises auf die Patenterteilung:
**27.09.89 Patentblatt 89/39**

(84) Benannte Vertragsstaaten:
**FR GB NL**

(56) Entgegenhaltungen:
**DE-A- 3 114 143**
**DE-A- 3 133 961**

(73) Patentinhaber: **Messerschmitt-Bölkow-Blohm GmbH, Hünefeldstrasse 1-5, D-2800 Bremen 1 (DE)**

(72) Erfinder: **Steinhauer, Hans-Jürgen, Utrechter Strasse 27A, D-2870 Delmenhorst (DE)**
Erfinder: **Martens, Wilhelm, Brinkumer Strasse 3, D-2870 Delmenhorst (DE)**

## Beschreibung

Die Erfindung betrifft eine Antriebs- und Führungsvorrichtung für an einem Flugzeugtragflügel angeordnete Klappe, insbesondere für eine Hinterkantenklappe eines transsonischen Tragflügels für Verkehrs- und Transportflugzeuge, bei dem während des Fluges die Wölbung des Tragflügels zur Verbesserung der aerodynamischen Effektivität verändert wird, bestehend aus beiderseits der Klappe angeordneten kombinierten Trag- und Führungsschienen, zum Aus- und Einfahren der Klappe, sowie einem über eine Koppelungseinrichtung auf die Klappe wirkenden Stellantrieb, wie es z. B. durch die DE-A-3133961 bekannt ist.

Es ist bereits bekannt, zum Ein- und Ausfahren von Klappensystemen an Flugzeugtragflügeln, beispielsweise auch von Hinterkantenklappen, die bei Start und Landung als Hochauftriebshilfen dienen, sogenannte Schienenkinematiken der vorstehend angegebenen Art zu verwenden. Während diese Klappensysteme im allgemeinen in der Reiseflugphase des Flugzeuges, in vollständig eingefahrenem Zustand, den rückwärtigen Abschluß der gleichsam festen Flügelkontur bilden, ist in der DE-A-3114143 ein Verfahren vorgeschlagen worden, das der Optimierung des Reiseflugzustandes von Flugzeugen und transsonischen Tragflügeln dient und bei dem während der Reiseflugphase die Wölbung des Tragflügels entsprechend den aktuellen Flugbedingungen wie Gewicht, Geschwindigkeit und Flughöhe definiert verändert wird. Die Wölbungsänderungen werden dabei, mittels des für den Niedergeschwindigkeitsbereich bzw. für die Lagesteuerung des Flugzeuges vorgesehenen Klappen- und Spoilersystems realisiert.

Aufgabe der vorliegenden Erfindung ist es in diesem Zusammenhang, eine Antriebs- und Führungsvorrichtung der eingangs genannten Art so auszubilden, daß sie neben dem Aus- und Einfahren der Klappe in die für Start, Landung und Reiseflug vorgesehenen Positionen zugleich eine Veränderung der Wölbung des Tragflügelprofils in der Reiseflugkonfiguration der Klappe ermöglicht.

Diese Aufgabe wird erfindungsgemäß dadurch gelöst, daß die Klappe drehbeweglich in den Trag- und Führungsschienen gehaltert ist und über ein im Abstand zu ihrer Drehachse angreifendes Lenkerelement mit einem Drehhebel verbunden ist, dessen eines Ende fest mit dem Ausgang des Stellantriebes verbunden ist und bei dem die Lage des anderen, mit dem Lenkerelement verbundenen Endpunktes in Bezug auf die Drehachse definiert veränderbar ist.

Dadurch ist es möglich, die Klappe im eingefahrenen Zustand innerhalb eines vorgebbaren Winkelbereiches eine Rotationsbewegung ausführen zu lassen und so die angestrebte Veränderung der Profilwölbung herbeizuführen. Die dabei zugleich auftretende Translationsbewegung der Klappe ist vergleichsweise gering, so daß es nicht zur Bildung von unerwünschten Spalten und damit nicht zu einer Störung der strömungsgünstigen Kontur kommen kann.

Indem in einer weiteren Maßnahme die Bahnform der Trag- und Führungsschienen auf die vom beweglichen Endpunkt des Drehhebels zurückgelegte Bahnkurve abgestimmt wird, wird zugleich ein optimaler Konturausgleich sowie eine reibungslose Durchführung der Wölbungsveränderung sichergestellt.

In den weiteren Unteransprüchen sind zwei bevorzugte Ausführungsbeispiele der erfindungsgemäßen Antriebs- und Führungsvorrichtung angegeben, die sich durch einen besonders einfachen und dabei zugleich funktionssicheren Aufbau auszeichnen und die innerhalb des Ursprungsprofils ein vergleichsweise hohes Maß an Wölbungsänderung ermöglichen.

Im folgenden soll die Erfindung anhand zweier in der Zeichnung dargestellter Ausführungsbeispiele näher erläutert werden. Es zeigen:

Fig. 1 ein erstes Ausführungsbeispiel der erfindungsgemäßen Antriebs- und Führungsvorrichtung in schematischer Darstellung,

Fig. 2 eine Detaildarstellung der Anordnung gemäß Fig. 1,

Fig. 3 die Anordnung gemäß Fig. 2 in seitlicher Ansicht,

Fig. 4 eine Darstellung des Bewegungsablaufs der in Fig. 1 dargestellten Anordnung,

Fig. 5 ein zweites Ausführungsbeispiel der Erfindung in schematischer Darstellung,

Fig. 6 eine Detaildarstellung der Anordnung gemäß Fig. 5,

Fig. 7 die Anordnung gemäß Fig. 6 in seitlicher Ansicht und

Fig. 8 eine Darstellung des Bewegungsablaufs der in Fig. 5 gezeigten Anordnung.

In den Figuren sind jeweils gleiche Bauteile mit den gleichen Bezugszeichen versehen.

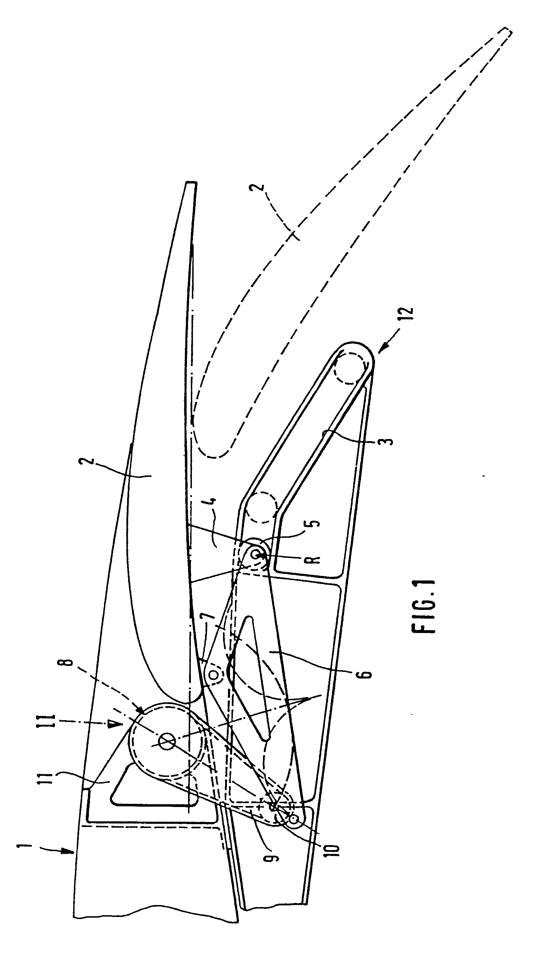

Bei der in Fig. 1 gezeigten Anordnung handelt es sich in einem ersten Ausführungsbeispiel der Erfindung um einen Schnitt durch den Hinterkantenbereich eines transsonischen Tragflügels für Verkehrs- und Transportflugzeuge. Im einzelnen zeigt die Figur einen Teil der Struktur des Tragflügels 1, in dessen hinterem Endbereich eine Hinterkantenklappe 2 angeordnet ist. Der Hinterkantenklappe 2 ist ein Antriebs- und Führungssystem zugeordnet, das im Wesentlichen aus den folgenden Komponenten besteht:

Zwei seitlich der Klappe 2 angeordnete kombinierte Trag- und Führungsschienen 3, von denen in der Zeichnung nur eine dargestellt ist, nehmen jeweils an einem Ansatz 4 der Klappe gehaltertes Stützrad 5 auf. Die Führungsschienen 3 weisen dabei im Fall des hier dargestellten Ausführungsbeispiels zwei um einen stumpfen Winkel gegeneinander geneigte lineare Bereiche auf. Über einen Dreieckslenker 6, der außer an der Drehachse des Stützrades 5 noch über einen zweiten Ansatz 7 an der Klappe 2 angelenkt ist, ist letztere mit einem zugeordneten Stellantrieb 8 kraftschlüssig verbunden. Die Verbindung wird dabei über einen ersten Hebel 9 realisiert, dessen eines Ende fest an der Ausgangswelle eines Stellantriebes 8 angeflanscht ist und dessen anderes Ende mit dem Dreieckslenker 6 gekoppelt ist. Zur Kopplung dient ein zweiter Hebel 10, der drehbeweglich am Hebel 9 gehaltert ist. Wie weiter aus der Fig. 1 hervorgeht, ist der Stellantrieb 8 über eine Halterung 11 im Innern der Flügelstruktur befestigt, während die Trag- und Führungsschienen 3 in separaten, unter dem Tragflügel 1 angeordneten Gehäuse 12 angeordnet sind.

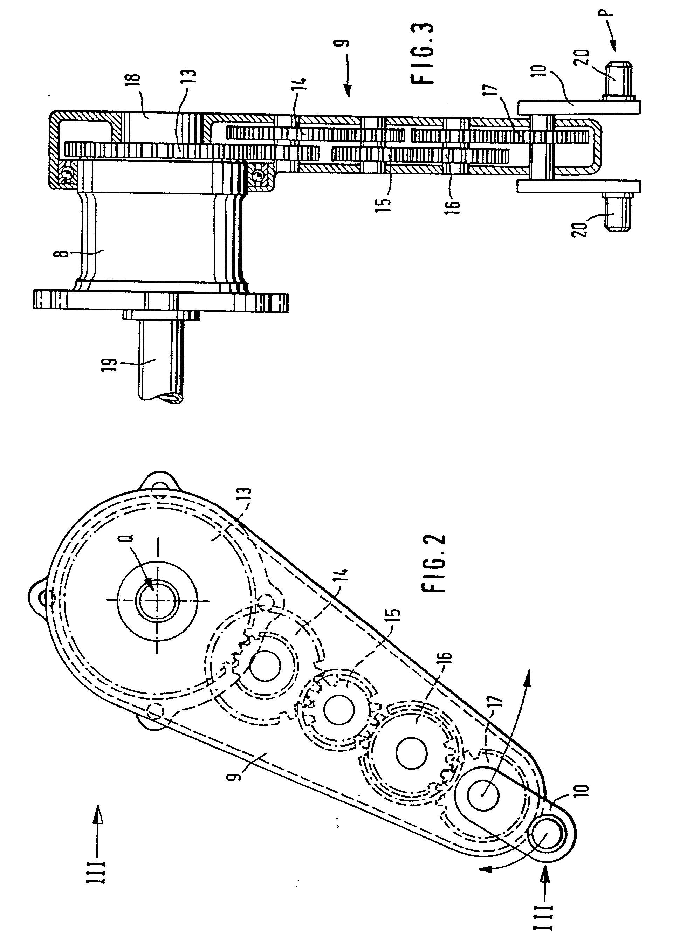

Nähere Einzelheiten, die insbesondere den Antrieb der in Fig. 1 gezeigten Anordnung betreffen, sind in den Figuren 2 und 3 dargestellt. Wie aus diesen Figuren ersichtlich, ist im Innern des Hebels 9 ein Satz aus insgesamt fünf miteinander verzahnten Zahnrädern 13 bis 17 angeordnet, von denen das erste Zahnrad 13 fest am Gehäuse des als Stellantriebs dienenden Getriebes 8, konzentrisch mit der Ausgangswelle 18 dieses Getriebes und damit der Drehachse des ersten Hebels 9, gehaltert ist. Andererseits ist das Zahnrad 17, das letzte des Zahnradsatzes, auf der Drehachse des zweiten Hebels 10 angeordnet und fest mit dieser verbunden. Auf diese Weise wird die Bewegung der von einem in der Zeichnung nicht dargestellten Stellmotor beaufschlagten Eingangswelle 19 des Getriebes 8 auf den Hebel 10 und über am äußeren Ende dieses zweiten Hebels angeordnete Stutzen 20 weiter auf den Dreieckslenker 6 und damit auf die Klappe 2 übertragen, wobei die Rotationsbewegungen der beiden Hebel 9 und 10 einen einander entgegengesetzten Drehsinn aufweisen.

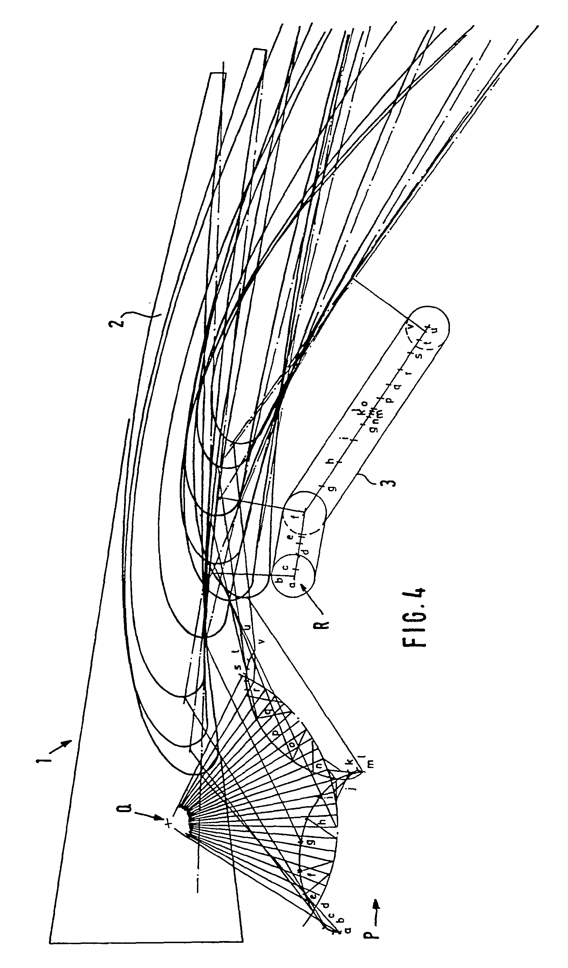

Die weitere Funktionsweise der vorstehend beschriebenen Anordnung soll nun anhand der in Fig. 4 dargestellten einzelnen Stadien des Bewegungsablaufs erläutert werden, wobei einzelne Phasen des Bewegungsablaufs zwischen dem vollständig eingefahrenen und dem vollständig ausgefahrenen Zustand der Hinterkantenklappe 2 mit kleinen lateinischen Buchstaben gekennzeichnet sind.

Die im linken Teil der Fig. 4 abgebildete Zykloidenbahn stellt die Bahnkurve des Punktes P dar, der seinerseits die Lage der Mittelachse der Stutzen 20 wiedergibt. Die im rechten unteren Teil der Fig. 4 gezeigte Bahnkurve gibt dagegen die Position der Drehachse R des Stützrades 5 während der einzelnen Phasen an. Schließlich ist mit Q die Lage der Drehachse der Getriebeausgangswelle 18 gekennzeichnet.

Wie die Ausbildung zeigt, führt die durch den Zahnradsatz 13 bis 17 bewirkte Zwangskopplung zwischen der Stellbewegung des Getriebes 8 bzw. dessen Ausgangswelle 18 und der Rotation des zweiten Hebels 10 zu einer Modulation sowohl der Lage des Endpunktes als auch der effektiven Länge des aus den beiden Hebeln 9 und 10 gemeinsam gebildeten Drehhebels. Die Längen der beiden Hebel 9 und 10 stehen in einem für die gewünschte Modulation der Polbahn des Antriebspunktes P geeigneten Verhältnis zueinander, wobei der Differenzwinkel zwischen dem Hebel 9 und dem Gehäuse des Getriebes 8 durch Abwälzen des Zahnrades 14 auf dem fest mit dem Getriebegehäuse verbundenen Zahnrad 13 durch eine geeignet gewählte Übersetzung zur Drehbewegung des zweiten Hebels 10 genutzt wird. Dadurch, daß der Hebel 9 zugleich als Gehäuse für den Zahnradsatz 13 bis 17 ausgebildet ist, ist außerdem die erforderliche Steifigkeit der Anordnung sowie ein ausreichender Schutz der Antriebsvorrichtung gegen Schmutz und Beschädigung gewährleistet.

Die Übersetzung des Winkelweges des Hebels 9 sowie die Längen der beiden Hebel 9 und 10 sind so gewählt, daß die Polbahn des Antriebspunktes P bei einer Gesamtrotation des Hebels 10 um 720° eine aus zwei Segmenten bestehende Zykloidenbahn ergibt, deren drei Eckpunkte a, m und v den drei Klappenstellungen

«voll eingefahren»,
«Startposition» und
«Landeposition» entsprechen.

Wie die in Fig. 4 zugleich andeutungsweise dargestellte jeweils zugeordnete Position der Hinterkantenklappe 2 zu den einzelnen Phasen a bis v zeigt, wird mit der vorstehend beschriebenen Anordnung erreicht, daß in der ersten Phase der Drehbewegung des Stellantriebes 8 bei nur geringer Translation der Klappe 2 diese zugleich innerhalb des Ursprungsprofils des Tragflügels 1 eine Rotationsbewegung in einem vorgegebenen Winkelbereich durchführt, wodurch die gewünschte Wölbungsänderung des Flügelprofils erreicht wird.

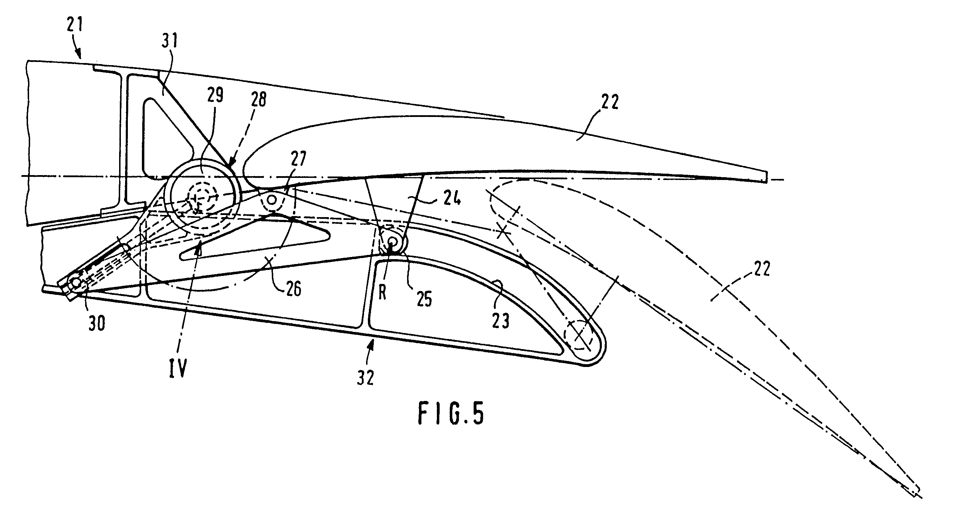

Bei dem zweiten, in den Fig. 5 bis 8 dargestellten Ausführungsbeispiel der erfindungsgemäßen Antriebs- und Führungsvorrichtung handelt es sich ebenfalls um ein Hinterkantenklappensystem für einen transonischen Tragflügel. Auch in diesem Fall ist an einem Tragflügel 21 eine Hinterkantenklappe 22 angeordnet, die in kombinierten Trag- und Führungsschienen 23 um eine Drehachse R schwenkbar gehalten ist. Die Führung der Klappe 22 in den in diesem Falle stetig gekrümmt verlaufenden Schienen 23 erfolgt, wie auch im ersten Ausführungsbeispiel, über jeweils ein an einem Ansatz 24 gehaltertes Stützrad 25. Auch die Anordnung des Dreiecklenkers 26, des zweiten Ansatzes 27, des Stellantriebes 28 sowie des von diesem beaufschlagten Hebels 29 entsprechen derjenigen der vergleichbaren Komponenten im ersten Ausführungsbeispiel. An die Stelle eines zweiten, am ersten drehbeweglich angeordneten Hebels tritt jedoch im Fall dieses zweiten Ausführungsbeispiels ein Gleitstein 30, der in dem dem Getriebe 28 abgewandten Ende des Hebels 29 längsverschieblich gehalten ist. Die Halterung 31 für das Getriebe 28 sowie das Gehäuse 32 zur Aufnahme der Schiene 23 entsprechen dagegen wieder der Anordnung im ersten Ausführungsbeispiel.

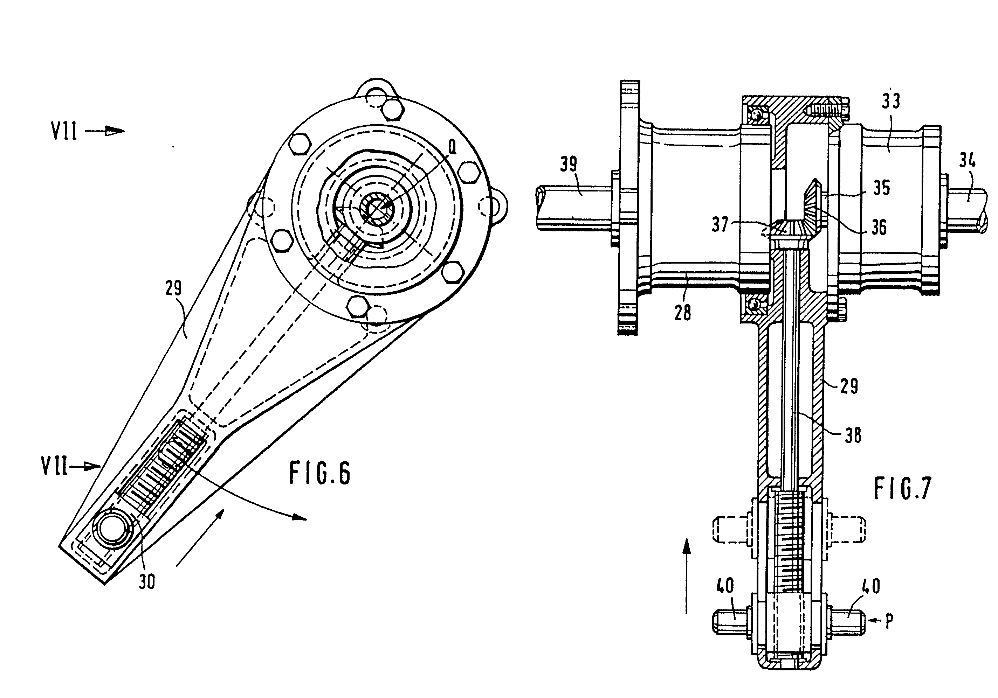

Die näheren Einzelheiten des Aufbaus des längenveränderlichen Drehhebels 29 sowie der zugehörigen Antriebseinheit sind den Fig. 6 und 7 zu entnehmen. Dem Stellantrieb für den Drehhebel 29, d.h. dem Getriebe 28 mit der Eingangswelle 39, ist ein weiteres Getriebe 33 mit einer Eingangswelle 34 zugeordnet, das unmittelbar am Gehäuse des Drehhebels 29 angeflanscht ist. Ein auf der Getriebeausgangswelle 35 dieses zweiten Getriebes 33 sitzendes Kegelrad 36 treibt über ein zweites Kegelrad 37, das gegenüber dem ersten um 90° versetzt angeordnet ist, eine Spindel 38, die ihrerseits in dem als Spindelmutter ausgebildeten Gleitstein 30 läuft. Der Gleitstein 30 trägt auf zwei gegenüberliegenden Außenflächen jeweils einen Antriebsstutzen 40 und ist in zwei langlochförmigen Ausnehmungen 41, 42 des als Gehäuse ausgebildeten Drehhebels 29 gleitend verschieblich geführt. Über die Stutzen 40 wird schließlich eine kraftschlüssige Verbindung zum Dreieckslenker 26 hergestellt, durch die die Bewegung des von einem in diesem Fall ebenfalls nicht dargestellten Stellmotors beaufschlagten Getriebes 28 auf die Hinterkantenklappe 22 übertragen wird.

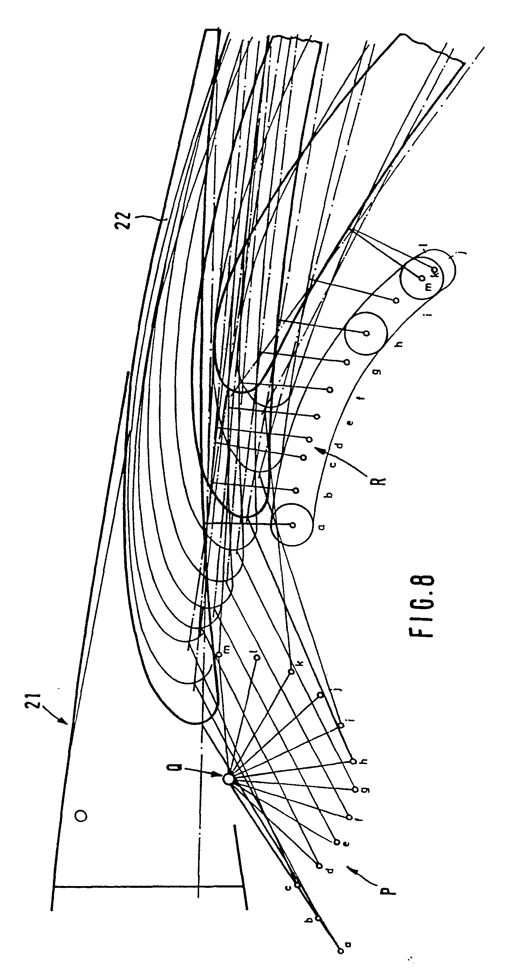

Die Funktionsweise des vorstehend beschriebenen zweiten Ausführungsbeispiels der erfindungsgemäßen Anordnung ergibt sich, soweit nicht im Zusammenhang mit der Erläuterung ihres konstruktiven Aufbaus beschrieben, wiederum aus dem in Fig.8 gezeigten Verlauf der Bahnkurven der Punkte P und R. Dabei kennzeichnet P wieder die Mittelachse der Stutzen 40 und R die Drehachse der Stützräder 25; die einzelnen Stadien des Bewegungsablaufs sind wieder mit kleinen lateinischen Buchstaben, in diesem Fall von a bis m, gekennzeichnet.

Wie aus der Darstellung in Fig.8 ersichtlich, setzt sich der Bewegungsablauf des Gesamtantriebes aus zwei Teilbewegungen zusammen:

Durch Betätigung des zweiten Getriebes 33 über einen hier nicht dargestellten separaten Stellantrieb wird, bei ruhendem Getriebe 28, eine geradlinige Bewegung des Punktes P bewirkt, die in diesem Fall von außen auf den Antriebsmittelpunkt hin verläuft (Punkte a bis c). Dieses führt zu einer Rotation der Flügelklappe 22 bei gleichzeitig nur geringer Translation, d.h. im wesentlichen ohne Bildung eines die Kontur störenden Luftspaltes zwischen der Tragflügelhinterkante und der Klappennase. Durch diesen Bewegungsablauf wird eine Wölbungsänderung des Tragflügels in der Reiseflugkonfiguration bewirkt.

Wird andererseits bei stillstehendem Getriebe 33 das Hauptgetriebe 28, d.h. der Stellantrieb für den Drehhebel 29, betätigt, so führt dies dazu, daß sich der Punkt P auf dem durch die Form der Führungsschiene 23 vorgegebenen Kreisbogen bewegt. Dies bewirkt eine Translation der Flügelklappe 22 mit gleichzeitiger Rotation, wobei es in diesem Fall zu einer Spaltbildung zwischen Tragflügelhinterkante und Klappennase kommt. Diese Bewegung entspricht dem Ausfahren der Klappe in die Start- bzw. Landeposition.

Werden schließlich beide Antriebe gleichzeitig betätigt (in Fig.8 nicht dargestellt), so ergeben sich darüber hinaus überlagerte Bewegungen, die weitere Klappenstellungen, abweichend von den vorstehend beschriebenen, möglich machen und so die Flexibilität des Systems weiter erhöhen.

Erwähnt sei schließlich noch, daß der Einsatzbereich der erfindungsgemäßen Antriebs- und Führungsvorrichtung nicht auf den in den beiden beschriebenen Ausführungsbeispielen angegebenen Anwendungsfall, nämlich zur Betätigung von Hinterkantenklappensystemen, beschränkt ist, sondern daß die erfindungsgemäße Vorrichtung in gleicher Weise auch für Flügelvorderkantenklappensysteme geeignet ist. Auch ist die Verwendung der Erfindung nicht auf Tragflügel mit transsonischem Profil beschränkt.

**Bezugszeichenliste**

1 Tragflügel
2 Hinterkantenklappe
3 Führungsschiene
4 Ansatz
5 Stützrad
6 Dreieckslenker
7 zweiter Ansatz
8 Stellantrieb
9 erster Hebel
10 zweiter Hebel
11 Halterung
12 Gehäuse
13–17 Zahnräder
18 Getriebeausgangswelle
19 Getriebeeingangswelle
20 Stutzen
P Mittelachse Stutzen 20
R Drehachse Stützrad 5
Q Drehachse Gewindeausgangswelle 18
a–v Positionen auf den jeweiligen Bahnkurven
21
22
23
24
25
26
27
28
29
30 Gleitstein
31 Halterung
32 Gehäuse
33 Nebengetriebe
34 Getriebeeingangswelle (Nebengetriebe)
35 Getriebeeingangswelle (Hauptgetriebe)
36 Kegelrad
37 Kegelrad
38 Spindel
39 Getriebeeingangswelle (Hauptgetriebe)
40 Stutzen
41 Ausnehmung
42 Ausnehmung

**Patentansprüche**

1. Antriebs- und Führungsvorrichtung für eine an einem Flugzeugtragflügel angeordnete Klappe, insbesondere für eine Hinterkantenklappe eines transsonischen Tragflügels für Verkehrs- und Transportflugzeuge, bei dem während des Fluges die Wölbung des Tragflügels zur Verbesserung der aerodynamischen Effektivität verändert wird, bestehend aus beiderseits der Klappe angeordneten kombinierten Trag- und Führungsschienen zum Aus- und Einfahren der Klappe sowie einem über eine Kopplungseinrichtung auf die Klappe wirkender Stellantrieb, dadurch gekennzeichnet, daß die Klappe (2, 22) drehbeweglich in den Trag- und Führungsschienen (3, 23) gehaltert ist und über ein im Abstand zu ihrer Drehachse (R) angreifendes Lenkerelement (6, 26) mit einem Drehhebel (9, 29) verbunden ist, dessen eines Ende fest mit dem Ausgang des Stellantriebes (8, 28) verbunden ist und bei dem die Lage des anderen, mit dem Lenkerelement (6, 26) verbundenen Endpunktes (20, 40) in bezug auf die Drehachse des Drehhebels (9, 29) definiert veränderbar ist.

2. Antriebs- und Führungsvorrichtung gemäß Anspruch 1, dadurch gekennzeichnet, daß die Bahnform der Trag- und Führungsschiene (3, 23) auf die vom beweglichen Endpunkt (20, 40) des Drehhebels (9, 29) vollführte Bewegungsbahn abgestimmt ist.

3. Antriebs- und Führungsvorrichtung nach Anspruch 1 oder 2, dadurch gekennzeichnet, daß die Lageveränderung des beweglichen Endpunktes (20) des Drehhebels (9) durch eine der Rotationsbewegung des Drehhebels (9) überlagerte zweite Rotationsbewegung des Endpunktes (20) realisiert wird, wobei der Drehsinn dieser zweiten Rotationsbewegung demjenigen der ersten Rotationsbewegung entgegengesetzt gerichtet ist.

4. Antrieb- und Führungsvorrichtung nach Anspruch 3, dadurch gekennzeichnet, daß an dem den Stellantrieb (8) abgewandten Ende des Drehhebels (9) ein zweiter Hebel (10) ebenfalls drehbeweglich angeordnet ist, dessen Drehachse zu derjenigen des Drehhebels (9) in etwa parallel liegt und dessen äußerer Endpunkt (20) mit dem Lenkerelement (6) gekoppelt ist.

5. Antriebs- und Führungsvorrichtung nach Anspruch 4, dadurch gekennzeichnet, daß zum Antrieb des zweiten Hebels (10) ein Zahnradsatz (13–17) vorgesehen ist.

6. Antriebs- und Führungsvorrichtung nach Anspruch 5, dadurch gekennzeichnet, daß der Drehhebel (9) als Gehäuse für den Zahnradsatz (13–17) ausgebildet ist.

7. Antriebs- und Führungsvorrichtung nach einem der Ansprüche 4 bis 6, dadurch gekennzeichnet, daß die Abmessungen der beiden Hebel (9, 10) sowie das Verhältnis der von ihnen jeweils überstrichenen Winkelbereiche so gewählt ist, daß sich bei einer Gesamtrotation des Drehhebels (9) um etwa 720 Winkelgrad als Polbahn eine Zykloide mit zwei Segmenten ergibt.

8. Antriebs- und Führungsvorrichtung nach Anspruch 1 oder 2, dadurch gekennzeichnet, daß die Lageveränderung des beweglichen Endpunktes (40) des Drehhebels (29) durch eine Translationsbewegung des dem Stellantrieb (28) abgewandten Endes des Drehhebels (29) realisiert wird.

9. Antriebs- und Führungsvorrichtung nach Anspruch 8, dadurch gekennzeichnet, daß der Drehhebel (29) als Gehäuse zur Aufnahme eines längsverschieblich geführten Gleitsteines (30) ausgebildet ist.

10. Antriebs- und Führungsvorrichtung nach Anspruch 9, dadurch gekennzeichnet, daß zum Verschieben des Gleitsteines (30) im Innern des Drehhebels (29) ein Spindeltrieb (36, 37, 38) vorgesehen ist.

11. Antriebs- und Führungsvorrichtung nach Anspruch 9 oder 10, dadurch gekennzeichnet, daß zum Verfahren des Gleitsteines ein zusätzlicher, zweiter Stellantrieb (33) vorgesehen ist.

12. Antriebs- und Führungsvorrichtung nach Anspruch 11, dadurch gekennzeichnet, daß der zweite Stellantrieb (33) separat antreibbar ist.

13. Antriebs- und Führungsvorrichtung nach Anspruch 11 oder 12, dadurch gekennzeichnet, daß der zweite Stellantrieb (33) am Drehhebel (29) angeflanscht ist.

## Claims

1. Driving and guiding device for an aircraft wing flap, in particular for a trailing edge flap of a transonic wing for passenger and transport aircraft, where the wing camber is varied during flight in order to improve the aerodynamic effectiveness, consisting of combined supporting and guiding rails disposed in each side of the flap for extending and retracting the flap, and an actuator acting on the flap via a coupling unit, characterised in that the flap (2, 22) is rotatably mounted on the supporting and guiding rails (3, 23) and is connected with a pivoted lever (9, 29) by means of a control element (6, 26) acting at a distance from its axis of rotation (R), one end of said pivoted lever being rigidly connected with the output of the actuator (8, 28) and where the other end (20, 40), connected with the control element (6, 26), can be specifically varied in relation to the axis of rotation of the pivoted lever (9, 29).

2. Driving and guiding device according to claim 1, characterised in that the path of the supporting and guiding rails (3, 23) is adapted to the path of motion executed by the movable end (20, 40) of the pivoted lever (9, 29).

3. Driving and guiding device according to claim 1 or 2, characterised in that the position of the movable end (20) of the pivoted lever (9) is varied by means of a second rotation of the end (20) superimposed upon the rotation of the pivoted lever (9), this second rotation being in the opposite to that of the first rotation.

4. Driving and guiding device according to claim 3, characterised in that a second lever (10) is disposed, also rotatably, on the end of the pivoted lever (9) remote from the actuator (8), the axis of rotation of this lever (10) being approximately parallel to that of the pivoted lever (9), and its external end (20) being coupled with the control element (6).

5. Driving and guiding device according to claim 4, characterised in that a gear set (13–17) is provided to drive the second lever (10).

6. Driving and guiding device according to claim 5, characterised in that pivoted lever (9) forms a housing for the gear set (13–17)!

7. Driving and guiding device according to one of claims 4 to 6, characterised in that the dimensions of the two levers (9, 10) and the ratio of the respective angular ranges they cover are selected in such a way that one complete rotation of the pivoted lever (9) about approximately 720 angular degrees produces a centrode in the form of a cycloid with two segments.

8. Driving and guiding device according to claim 1 or 2, characterised in that the position of the movable end (40) of the pivoted lever (29) is varied by means of translation of the end of the pivoted lever (29) remote from the actuator (28).

9. Driving and guiding device according to claim 8, characterised in that the pivoted lever (29) forms a housing for receiving a longitudinally movable sliding member (30).

10. Driving and guiding device according to claim 9, characterised in that a worm gear (36, 37, 38) is provided to move the sliding member (30) into the interior of the pivoted lever (29).

11. Driving and guiding device according to claim 9 or 10, characterised in that a second additional actuator (33) is provided to move the sliding member.

12. Driving and guiding device according to claim 11, characterised in that the second actuator (33) can be operated separately.

13. Driving and guiding device according to claim 11 or 12, characterised in that the second actuator (33) is flanged on to the pivoted lever (29).

## Revendications

1. Dispositif d'entraînement et de guidage pour un volet monté sur une aile portante d'avion, notamment pour un volet arrière d'une aile portante transsonique d'un avion de transport de passagers ou de fret, et qui au cours du vol modifie la courbure de l'aile portante pour améliorer l'efficacité aérodynamique, dispositif composé de rails de support et de guidage, combinés prévus de chaque côté du volet pour sortir et rentrer les volets, ainsi que d'une commande de positionnement agissant sur le volet par l'intermédiaire d'un dispositif de couplage, dispositif caractérisé en ce que le volet (2, 22) monté mobile en rotation dans les rails de support et de guidage (3, 23) est relié par un élément de bras (6, 26) à un levier tournant (9, 29) en un point situé à une certaine distance de son axe de rotation (R), levier tournant dont une extrémité est reliée solidairement à la sortie de la commande de positionnement (8, 28) et dont la position de l'autre extrémité (20, 40) reliée à l'élément de bras (6, 26) peut être modifiée de manière définie par rapport à l'axe de rotion du levier tournant (9, 29).

2. Dispositif d'entraînement et de guidage selon la revendication 1, caractérisé en ce que la forme de la trajectoire réalisée par les rails de support et de guidage (3, 23) est choisie en fonction de la trajectoire à décrire par l'extrémité mobile (20, 40) du levier tournant (9, 29).

3. Dispositif d'entraînement et de guidage selon la revendication 1 ou 2, caractérisé en ce que le changement de position de l'extrémité mobile (20) du levier tournant (9) est réalisé par un mouvement de rotation du levier tournant (9) combiné à un second mouvement de rotation de l'exrémité (20), le sens de rotation de second mouvement de rotation étant opposé à celui du premier mouvement de rotation.

4. Dispositif d'entraînement et de guidage selon la revendication 3, caractérisé en ce que l'extrémité du levier tournant (9) opposée à celle de la commande de position (8) comporte un second levier (9) monté également mobile en rotation dont l'axe de rotation est sensiblement parallèle à celui du levier tournant (9) et dont l'extrémité extérieure (20) est reliée à l'élément de bras (6).

5. Dispositif d'entraînement et de guidage selon la revendication 4, caractérisé en ce qu'un pignon denté (13–17) assure l'entraînement du second levier (10).

6. Dispositif d'entraînement et de guidage selon la revendication 5, caractérisé en ce que le levier tournant (9) est en forme de carter recevant le jeu de pignons dentés (13–17).

7. Dispositif d'entraînement et de guidage selon l'une des revendications 4 à 6, caractérisé en ce que les dimensions des deux leviers (9, 10) ainsi que le rapport des plages angulaires balayées par ces leviers sont choisies pour que dans le cas d'une rotation globale du levier tournant (9) sur environ 720° d'angle, on obtienne une trajectoire polaire en forme de cycloïde à deux segments.

8. Dispositif d'entraînement et de guidage selon la revendication 1 ou 2, caractérisé en ce que le changement de position du point d'extrémité mobile (40) du levier tournant (29) est réalisé par un mouvement de translation de l'extrémité du levier tournant (29) opposé à la commande de positionnement (28).

9. Dispositif d'entraînement et de guidage selon la revendication 8, caractérisé en ce que le levier tournant (29) est en forme de carter recevant un galet (30) guidé en translation.

10. Dispositif d'entraînement et de guidage selon la revendication 9, caractérisé par un entraînement à broche (36, 37, 38) pour déplacer le galet (30) à l'intérieur du levier tournant (29).

11. Dispositif d'entraînement et de guidage selon la revendication 9 ou 10, caractérisé par une seconde commande de positionnement (39), complémentaire pour déplacer le galet.

12. Dispositif d'entraînement et de guidage selon la revendication 11, caractérisé en ce que la seconde commande de positionnement (33) est à entraînement distinct.

13. Dispositif d'entraînement et de guidage selon la revendication 11 ou la revendication 12, caractérisé en ce que la seconde commande de positionnement (33) est fixée par bride sur le levier tournant (29).

FIG.1

FIG.3

FIG.2

FIG. 4

EP 0205939 B1

FIG.5

FIG.7

FIG.6

FIG.8

EP 0205939 B1